# EUROPÄISCHE PATENTSCHRIFT

(11) **EP 4 114 642 B1**
(45) Veröffentlichungstag und Bekanntmachung des Hinweises auf die Patenterteilung: **25.06.2025**
(21) Anmeldenummer: 21707206.5
(22) Anmeldetag: 18.02.2021
(51) Int. Cl.: B29C 64/153, B29C 64/268, G02B 7/18, G02B 26/10, B33Y 30/00, B22F 12/49, B22F 12/20, B22F 12/40, B29C 64/25

(54) **STRAHLLENKEINRICHTUNG ZUM LENKEN WENIGSTENS EINES ENERGIESTRAHLS ENTLANG EINER OBERFLÄCHE**
BEAM DIRECTING DEVICE FOR DIRECTING AT LEAST ONE ENERGY BEAM ALONG A SURFACE
DISPOSITIF D'ORIENTATION DE FAISCEAU POUR DIRIGER AU MOINS UN FAISCEAU D'ÉNERGIE LE LONG D'UNE SURFACE

(30) Priorität: 03.03.2020 DE 102020105650
(43) Veröffentlichungstag der Anmeldung: 11.01.2023
(73) Patentinhaber: Herzog, Frank Carsten, 96215 Lichtenfels (DE)
(72) Erfinder: HERZOG, Frank, Carsten, 96215 Lichtenfels (DE)
(74) Vertreter: Hafner & Kohl PartmbB
(86) Internationale Anmeldenummer: PCT/EP2021/054067
(87) Internationale Veröffentlichungsnummer: WO 2021/175613

(56) Entgegenhaltungen:
- WO-A1-2014/135136
- WO-A1-2014/135136
- WO-A1-2014/135136
- DE-A1- 102014 000 415
- DE-A1- 102014 000 415
- DE-A1- 102014 000 415
- DE-A1- 102018 203 750
- DE-A1- 102018 203 750

## Beschreibung

Die Erfindung betrifft eine Strahllenkeinrichtung zum Lenken wenigstens eines Energiestrahls, wie z. B. eines Laserstrahls, entlang einer Oberfläche, insbesondere entlang einer im Rahmen eines additiven Fertigungsvorgangs selektiv zu verfestigenden Oberfläche einer selektiv verfestigbaren Baumaterialschicht, umfassend eine einen Aufnahmeraum zur Aufnahme wenigstens einer Funktionskomponente der Strahllenkeinrichtung begrenzenden Gehäusestruktur.

Entsprechende - regelmäßig auch als Scannereinrichtungen bezeichnete - Strahllenkeinrichtungen sind aus dem Stand der Technik in einer Vielzahl an unterschiedlichen Ausführungsformen bekannt. Ein beispielhaftes Einsatzgebiet entsprechender Strahllenkeinrichtungen ist das Gebiet der additiven Fertigung, in welchem entsprechende Strahllenkeinrichtungen zur selektiven Verfestigung selektiv zu verfestigender Baumaterialschichten eingesetzt werden.

Entsprechende Strahllenkeinrichtungen umfassen typischerweise eine Gehäusestruktur, welche einen zur Aufnahme von Funktionskomponenten der jeweiligen Strahllenkeinrichtung, d. h. insbesondere elektrischen und/oder elektronischen und/oder optischen Funktionskomponenten der Strahllenkeinrichtung, begrenzenden Aufnahmeraum umfasst.

Es ist bekannt, dass entsprechende Strahllenkeinrichtungen bzw. deren in einem entsprechenden Aufnahmeraum aufgenommenen Funktionskomponenten im Betrieb höheren Temperaturen ausgesetzt sind bzw. sein können, was eine besondere Herausforderung an die exakte Ausrichtung und/oder Positionierung der Funktionskomponenten respektive die Beibehaltung einer exakten Ausrichtung und/oder Positionieren der Funktionskomponenten darstellt.

Mithin besteht ein Weiterentwicklungsbedarf entsprechender Strahllenkeinrichtungen dahin, eine zuverlässige Kompensationsmöglichkeit von thermisch induzierten Änderungen der Ausrichtung und/oder Positionierung der in einem entsprechenden gehäusestrukturseitig begrenzten Aufnahmeraum aufgenommenen Funktionskomponenten zu schaffen.

WO 2014/135136 A1 offenbart eine Strahllenkeinrichtung.

DE 10 2014 000 415 A1 offenbart eine Strahllenkeinrichtung.

Die Erfindung ist durch die Gegenstände der Ansprüche definiert.

Ein erster Aspekt der hierin beschriebenen Erfindung betrifft eine Strahllenkeinrichtung zum Lenken wenigstens eines Energiestrahls, d. h. z. B. eines Laserstrahls, entlang einer Oberfläche. Die gegebenenfalls auch als Scannervorrichtung, gegebenenfalls als Galvanoscannereinrichtung, zu bezeichnende bzw. zu erachtende Strahllenkeinrichtung ist eingerichtet, einen entsprechenden Energiestrahl in einer oder mehreren Ablenkrichtungen entlang einer Oberfläche zu lenken.

Bei einer entsprechenden Oberfläche kann es sich z. B. um die Oberfläche einer im Rahmen eines additiven Fertigungsvorgangs, wie z. B. eines selektiven Laserschmelzvorgangs, selektiv zu verfestigenden Baumaterialschicht aus einem, gegebenenfalls pulverförmigen, selektiv verfestigbaren Baumaterial, wie z. B. einem Metall, Kunststoff oder einer Keramik, handeln. Die Strahllenkeinrichtung kann daher einen Bestandteil einer additiven Fertigungsvorrichtung bilden. Die Strahllenkeinrichtung umfasst in allen Ausführungsformen typischerweise wenigstens einen optischen Eingang, über welchen wenigstens ein Energiestrahl in die Strahllenkeinrichtung eintreten kann, und wenigstens einen optischen Ausgang, über welchen wenigstens ein vermittels der Strahllenkeinrichtung auf eine jeweilige Oberfläche abgelenkter Energiestrahl aus der Strahllenkeinrichtung austreten kann. Sowohl dem Eingang als auch dem Ausgang der Strahllenkeinrichtung können ein oder mehrere optische Bauelemente, wie z. B. Linsen, zuordenbar oder zugeordnet sein.

Die Strahllenkeinrichtung umfasst eine Gehäusestruktur. Die Gehäusestruktur begrenzt wenigstens einen Aufnahmeraum bzw. Innenraum zur Aufnahme wenigstens einer, insbesondere elektrischen und/oder elektronischen und/oder optischen, Funktionskomponente der Strahllenkeinrichtung. Die Gehäusestruktur weist sonach typischerweise wenigstens eine Befestigungsschnittstelle zur, gegebenenfalls lösbaren, Befestigung einer, insbesondere elektrischen und/oder elektronischen und/oder optischen, Funktionskomponente an oder in der Gehäusestruktur auf. Entsprechende Befestigungsschnittstellen können z. B. eine form- und/oder kraftschlüssige Befestigung einer Funktionskomponente an oder in der Gehäusestruktur ermöglichen. Entsprechende Befestigungsschnittstellen können einstückig mit der Gehäusestruktur ausgebildet sein.

Die Gehäusestruktur weist zudem typischerweise wenigstens eine Befestigungsschnittstelle zur, gegebenenfalls lösbaren, Befestigung der Gehäusestruktur an einem Drittgegenstand, wie z. B. einer die Strahllenkeinrichtung einsetzenden Vorrichtung, wie z. B. einer additiven Fertigungsvorrichtung, auf. Entsprechende Befestigungsschnittstellen können z. B. eine form- und/oder kraftschlüssige Befestigung der Gehäusestruktur an einem Drittgegenstand ermöglichen. Entsprechende Befestigungsschnittstellen können einstückig mit der Gehäusestruktur ausgebildet sein.

Ein jeweiliger Aufnahmeraum der Gehäusestruktur ist durch eine oder mehrere Wandungen bzw. Wandungsabschnitte der Gehäusestruktur begrenzt. Ein jeweiliger Aufnahmeraum ist sonach in funktioneller bzw. konstruktiver Hinsicht zur Aufnahme wenigstens einer Funktionskomponente der Strahllenkeinrichtung eingerichtet. Mithin kann in einem jeweiligen Aufnahmeraum wenigstens eine Funktionskomponente der Strahllenkeinrichtung angeordnet oder ausgebildet sein. Sofern die Gehäusestruktur mehrere Aufnahmeräume begrenzt, kann in jedem Aufnahmeraum wenigstens eine Funktionskomponente der Strahllenkeinrichtung angeordnet oder ausgebildet sein.

Bei einer entsprechenden elektrischen bzw. elektronischen Funktionskomponente der Strahllenkeinrichtung kann es sich z. B. um eine hardware- softwaremäßig implementierte Einrichtung der Strahllenkeinrichtung, wie z. B. um eine Steuer- bzw. Regeleinrichtung, oder um eine Antriebseinrichtung für ein optisches Bauelement, handeln. Bei einer entsprechenden optischen Funktionskomponente der Strahllenkeinrichtung kann es sich z. B. um ein optisches Bauelement der Strahllenkeinrichtung, wie z. B. um einen Umlenkspiegel, handeln. Die innerhalb des Aufnahmeraums aufgenommenen Funktionskomponenten können im Betrieb der Strahllenkeinrichtung zusammenwirken, sodass die Strahllenkeinrichtung insgesamt als elektro-optische Einrichtung bezeichnet bzw. erachtet werden kann.

Die Gehäusestruktur weist eine Temperierkanalstruktur auf, welche wenigstens einen von einem Temperiermedium - hierbei kann es sich grundsätzlich um ein, gegebenenfalls aktiv temperiertes, Gas und/oder um eine, gegebenenfalls aktiv temperierte, Flüssigkeit handeln - durchströmbaren bzw. durchströmten Temperierkanal umfasst. Die Temperierkanalstruktur ist typischerweise in die Gehäusestruktur integriert. Die Integration der Temperierkanalstruktur in die Gehäusestruktur ist insbesondere dadurch realisiert, dass der oder die die Temperierkanalstruktur bildenden Temperierkanäle in die den Aufnahmeraum begrenzenden Wandungen bzw. Wandungsabschnitte der Gehäusestruktur integriert sind.

Ein jeweiliger Temperierkanal der Temperierkanalstruktur kann sich in wenigstens einer Raumrichtung und/oder -ausrichtung durch die Gehäusestruktur erstreckend angeordnet oder ausgebildet sein. Je nach räumlicher Erstreckung der Temperierkanalstruktur, d. h. insbesondere je nach räumlicher Anordnung und/oder Ausrichtung des oder der jeweiligen Temperierkanäle, kann sonach eine lokale oder globale Temperierung der Gehäusestruktur realisiert werden. Insgesamt ist es sonach möglich, dass die Temperierkanalstruktur sich in regelmäßiger und/oder unregelmäßiger Anordnung netzwerkartig bzw. -förmig durch die Gehäusestruktur erstreckend ausgebildet ist. Konkret kann eine die Temperierkanalstruktur sonach z. B. als sich ein- oder mehrdimensional, z. B. gitterartig bzw. -förmig, durch die Gehäusestruktur erstreckende Netzwerkstruktur ausgebildet sein.

Durch die Temperierkanalstruktur ist eine Möglichkeit einer zumindest abschnittsweisen, gegebenenfalls vollständigen, Temperierung der Gehäusestruktur gegeben, als durch das durch den oder die jeweiligen Temperierkanäle der Temperierkanalstruktur strömende Temperiermedium zum Zwecke der Kühlung gezielt thermische Energie aufgenommen und somit aus der Gehäusestruktur abgeführt und/oder zum Zwecke der Beheizung gezielt thermische Energie abgegeben und somit in die Gehäusestruktur zugeführt werden kann.

Die Temperierkanalstruktur kann sonach so konzipiert sein, dass sie in allen Bereich der Gehäusestruktur die gleiche Wärmeaustauschkapazität aufweist. Es ist jedoch auch denkbar, die Temperierkanalstruktur so zu konzipieren, dass diese in bestimmten Bereichen der Gehäusestruktur eine erste Wärmeaustauschkapazität, d. h. z. B. eine besonders hohe Wärmeaustauschkapazität, und in zweiten Bereichen der Gehäusestruktur eine von der ersten Wärmeaustauschkapazität verschiedene zweite Wärmeaustauschkapazität aufweist. Dies kann z. B. durch eine besonderes dichte Anordnung von Temperierkanälen pro Fläche bzw. Volumen und/oder eine bestimmte Querschnittsgeometrien der Temperierkanäle realisiert werden; mithin können in einem ersten Bereich der Gehäusestruktur eine erste Anzahl von Temperierkanälen pro Fläche bzw. Volumen und/oder Temperierkanäle einer ersten Querschnittsgeometrie und in einem von dem ersten Bereich verschiedenen zweiten Bereich der Gehäusestruktur eine von der ersten Anzahl verschiedene zweite Anzahl an Temperierkanälen pro Fläche bzw. Volumen und/oder Temperierkanäle einer von der ersten Querschnittsgeometrie verschiedenen zweiten Querschnittsgeometrie angeordnet oder ausgebildet sein. Derart können sonach unterschiedlich temperierbare bzw. temperierte Bereiche der Gehäusestruktur geschaffen werden.

Grundsätzlich gilt, dass die Temperierkanalstruktur mehrere miteinander kommunizierende Temperierkanäle und/oder mehrere nicht miteinander kommunizierende Temperierkanäle aufweisen kann. Mehrere Temperierkanäle der Temperierkanalstruktur können sonach strömungstechnisch miteinander verbunden sein oder nicht miteinander verbunden sein.

Durch die Temperierkanalstruktur können ein oder mehrere offene oder geschlossene Temperierkreisläufe in die Gehäusestruktur integriert werden. Beispielsweise kann ein durch wenigstens einen ersten Temperierkanal gebildeter und sich zumindest abschnittsweise durch die Gehäusestruktur erstreckender erster Temperierkreislauf ein Heizkrauslauf zur Beheizung der Gehäusestruktur und ein durch wenigstens einen zweiten Temperierkanal gebildeter und sich zumindest abschnittsweise durch die Gehäusestruktur erstreckender zweiter Temperierkreislauf ein Kühlkreislauf zur Kühlung der Gehäusestruktur sein. Denkbar ist es gleichermaßen, dass ein entsprechender erster Temperierkreislauf ein erster Heizkreislauf und ein entsprechender zweiter Temperierkreislauf ein zweiter Heizkreislauf oder ein entsprechender erster Temperierkreislauf ein erster Kühlkreislauf und ein entsprechender zweiter Temperierkreislauf ein zweiter Kühlkreislauf ist.

In allen Fällen ist durch die Integration der Temperierkanalstruktur in die Gehäusestruktur eine Kompensationsmöglichkeit von thermisch induzierten Änderungen der Ausrichtung und/oder Positionierung der in einem entsprechenden gehäusestrukturseitig begrenzten Aufnahmeraum aufgenommenen Funktionskomponenten geschaffen, sodass eine verbesserte Strahllenkeinrichtung vorliegt.

Die Gehäusestruktur kann zumindest abschnittsweise, gegebenenfalls vollständig, additiv gefertigt sein. Die additive Fertigung der Gehäusestruktur, d. h. die Fertigung der Gehäusestruktur in einem additiven Fertigungsverfahren, wie z. B. in einem selektiven Laserschmelzverfahren, einem Binder-Jetting-Verfahren, etc., ermöglicht ein Höchstmaß an Konstruktionsfreiheit und Funktionsintegration. Insbesondere lässt sich die Temperierkanalstruktur, gleich wie komplex diese gestaltet ist, auf einfache Weise in die Gehäusestruktur integrieren.

Es wurde bereits angedeutet, dass der wenigstens eine Temperierkanal der Temperierkanalstruktur sich zumindest abschnittsweise innerhalb einer den Aufnahmeraum der Gehäusestruktur begrenzenden Wandung erstreckend ausgebildet sein kann. Derart ist ein besonders effizienter Wärmeaustausch innerhalb der jeweiligen Wandung und dem in dem Temperierkanal strömenden Temperiermedium möglich, was eine besonders effiziente Temperiermöglichkeit der Wandung der Gehäusestruktur ermöglicht. Die Anordnung bzw. Ausbildung des wenigstens einen Temperierkanals in eine entsprechende Wandung kann z. B. aus der additiven Fertigung der Gehäusestruktur resultieren.

Selbstverständlich ist es auch denkbar, dass der wenigstens eine Temperierkanal sich zumindest abschnittsweise innerhalb mehrerer den Aufnahmeraum der Gehäusestruktur begrenzenden Wandungen erstreckend ausgebildet ist. Derart ist ein besonders effizienter Wärmeaustausch innerhalb der jeweiligen Wandungen und dem in dem Temperierkanal strömenden Temperiermedium möglich, was eine besonders effiziente Temperiermöglichkeit mehrerer Wandungen der Gehäusestruktur ermöglicht. Die Anordnung bzw. Ausbildung des wenigstens einen Temperierkanals in mehreren entsprechenden Wandungen kann z. B. aus der additiven Fertigung der Gehäusestruktur resultieren.

Wenigstens eine den Aufnahmeraum der Gehäusestruktur begrenzende Wandung kann mit wenigstens einer Durchbrechung, Öffnung oder dergleichen ausgebildet sein oder eine solche aufweisen. Eine entsprechende Wandung der Gehäusestruktur kann sonach zumindest abschnittsweise, gegebenenfalls vollständig, eine durch jeweilige Durchbrechungen, Öffnungen oder dergleichen und diese begrenzende, z. B. stegartige bzw. -förmige, Wandungsabschnitte der jeweiligen Wandung definierte offene Struktur aufweisen. Entsprechendes kann selbstverständlich für alle Wandungen der Gehäusestruktur gelten. Die Gehäusestruktur kann sonach, insbesondere im Vergleich zu einer Gehäusestruktur mit massiv ausgeführten Wandungen, im Hinblick auf Aspekte, wie Gewicht, mechanische Eigenschaften, thermische Eigenschaften, etc., optimiert ausgeführt sein. Die Ausbildung einer entsprechenden Wandung mit wenigstens einer Durchbrechung, Öffnung oder dergleichen kann z. B. aus der additiven Fertigung der Gehäusestruktur resultieren.

Aus vorstehenden Ausführungen ergibt sich, dass wenigstens eine den Aufnahmeraum der Gehäusestruktur begrenzende Wandung zumindest abschnittsweise mit einer, insbesondere im Hinblick auf auf diese im Betrieb der Strahllenkeinrichtung wirkenden mechanischen und/oder thermischen Belastungen optimierten, bionischen Struktur ausgebildet sein oder eine solche aufweisen kann. Die Ausbildung einer entsprechenden Wandung mit einer bionischen Struktur kann z. B. aus der additiven Fertigung der Gehäusestruktur resultieren.

In wenigstens einer den Aufnahmeraum der Gehäusestruktur begrenzenden Wandung ist wenigstens ein einen eine Zugangsmöglichkeit in den Aufnahmeraum schaffenden Wandungsabschnitt zumindest abschnittsweise, gegebenenfalls vollständig, begrenzender Sollbruchbereich ausgebildet. Wenigstens eine Wandung der Gehäusestruktur ist sonach mit wenigstens einem Sollbruchbereich ausgebildet, welcher einen eine Zugangsmöglichkeit in den Aufnahmeraum schaffenden Wandungsabschnitt zumindest abschnittsweise, gegebenenfalls vollständig, begrenzt. Wenigstens eine Wandung der Gehäusestruktur weist sonach wenigstens einen durch wenigstens einen Sollbruchbereich begrenzten und somit von übrigen Wandungsabschnitten der jeweiligen Wandung abgrenzbaren Wandungsabschnitt auf, welcher in einem ersten Zustand mit übrigen Wandungsabschnitten der jeweiligen Wandung verbunden ist, sodass keine Zugangsmöglichkeit in den Aufnahmeraum geschaffen ist, und in einem zweiten Zustand nicht mit übrigen Wandungsabschnitten der jeweiligen Wandung verbunden ist, sodass eine Zugangsmöglichkeit in den Aufnahmeraum geschaffen ist. Der Wandungsabschnitt ist in dem ersten Zustand sonach über wenigstens einen punkt- oder linienförmigen Verbindungsbereich, gegebenenfalls vollständig, mit übrigen Wandungsabschnitten der Gehäusestruktur verbunden und in dem zweiten Zustand nicht über den wenigstens einen Verbindungsbereich mit den übrigen Wandungsabschnitten der Gehäusestruktur verbunden.

Der zweite Zustand kann auch dadurch realisiert sein, dass ein entsprechender Wandungsabschnitt in dem zweiten Zustand abschnittsweise weiterhin an den übrigen Wandungsabschnitten verbunden ist, nunmehr allerdings z. B. deckel- oder klappenartig, an den übrigen Wandungsabschnitten angebunden ist, wodurch in dem zweiten Zustand ebenso eine Zugangsmöglichkeit in den Aufnahmeraum geschaffen ist.

Die Überführung des Wandungsabschnitts von dem ersten Zustand in den zweiten Zustand erfolgt durch "Aktivieren" des wenigstens einen Sollbruchbereichs, d. h. insbesondere durch Brechen des wenigstens einen Sollbruchbereichs. Das Aktivieren bzw. Brechen des wenigstens einen Sollbruchbereichs kann z. B. mechanisch, d. h. durch Einbringen mechanischer Energie, und/oder thermisch, d. h. durch Ab- und/oder Zuführen thermischer Energie, realisiert werden.

Es ist hierzu vorgesehen, dass der wenigstens eine Temperierkanal sich zumindest abschnittsweise zumindest abschnittsweise entlang des wenigstens einen Sollbruchbereichs und/oder zumindest abschnittsweise innerhalb des wenigstens einen Sollbruchbereichs erstreckend ausgebildet ist. Der wenigstens eine Temperierkanal kann sonach eingerichtet sein, durch gezieltes Temperieren ein Aktivieren bzw. Brechen des wenigstens einen Sollbruchbereichs herbeizuführen. Der wenigstens eine Sollbruchbereich kann hierfür über ein in dem wenigstens einen Temperierkanal strömendes Temperiermedium auf eine bestimmte Temperatur erhitzt werden, was z. B. zu einem Brechen oder Schmelzen des wenigstens einen Sollbruchbereichs führen kann, oder auf eine bestimmte Temperatur gekühlt werden, was z. B. zu einem Brechen des wenigstens einen Sollbruchbereichs führen kann. Selbstverständlich sind über den wenigstens einen Temperierkanal auch dynamische Temperierungen, d. h. insbesondere wechselnde Aufheizungen und Abkühlungen, des wenigstens einen Sollbruchbereichs denkbar, als diese ebenso zu einem gewünschten strukturellen Versagen des wenigstens einen Sollbruchbereichs führen können.

Der wenigstens einen Sollbruchbereich kann sonach, insbesondere strukturell, derart beschaffen sein, dass er bei Durchströmen des wenigstens einen Temperierkanals mit einem eine, gegebenenfalls materialspezifische, Grenztemperatur aufweisenden Temperiermedium bricht. Diese Beschaffenheit des wenigstens einen Sollbruchbereichs kann z. B. aus der additiven Fertigung der Gehäusestruktur resultieren.

Es ist denkbar, dass ein eine nach Entfernen eines ersten Wandungsabschnitts entstandene Zugangsöffnung in den Aufnahmeraum begrenzender zweiter Wandungsabschnitt der Gehäusestruktur zumindest abschnittsweise, gegebenenfalls vollständig, mit einer, insbesondere durch eine Mikrostrukturierung gebildeten, Befestigungsstruktur ausgebildet ist, welche eine erneute Befestigung des ersten Wandungsabschnitts an den zweiten Wandungsabschnitt ermöglicht. Mithin kann ein nach Entfernen eines entsprechenden ersten Wandungsabschnitts verbliebener und die nunmehr durch Entfernen des ersten Wandungsabschnitts entstandene Zugangsöffnung in den Aufnahmeraum begrenzender zweiter Wandungsabschnitt eine Befestigungsstruktur aufweisen, welche ein erneutes Befestigen eines entsprechenden ersten Wandungsabschnitts, d. h. insbesondere eines zuvor entfernten ersten Wandungsabschnitts, an dem die Zugangsöffnung begrenzenden zweiten Wandungsabschnitt und damit einhergehend ein Verschließen der zuvor geschaffenen Zugangsöffnung in den Aufnahmeraum ermöglicht. Der mit einem entsprechenden zweiten Wandungsabschnitt verbindbare oder verbundene erste Wandungsabschnitt kann mit einer zu der Befestigungsstruktur des zweiten Wandungsabschnitts korrespondieren Befestigungsstruktur ausgebildet sein. Die beiden Befestigungsstrukturen können z. B. kraft- und/oder formschlüssig zusammenwirken, um eine erneute Befestigung des ersten Wandungsabschnitts an dem zweiten Wandungsabschnitt herbeizuführen. Jeweilige Befestigungsstrukturen können additiv gefertigte Strukturen sein.

Eine entsprechende Befestigungsstruktur kann z. B. durch eine Mikrostrukturierung, wie z. B. durch eine besondere Rauhigkeit, insbesondere Mikrorauigkeit, des die Zugangsöffnung in den Aufnahmeraum begrenzenden zweiten Wandungsabschnitts der Gehäusestruktur ausgebildet sein. Entsprechend kann an dem ersten Wandungsabschnitt ein zu der Mikrostrukturierung des zweiten Wandungsabschnitts korrespondierende Mikrostrukturierung ausgebildet sein. Jeweilige Mikrostrukturierungen können additiv gefertigte Strukturierungen sein.

Eine entsprechende Befestigungsstruktur kann dichtende Eigenschaften aufweisen, sodass ein erneutes Befestigen eines zuvor entfernten ersten Wandungsabschnitts an einem zweiten Wandungsabschnitt mit einer Abdichtung der zuvor geschaffenen Zugangsöffnung in den Aufnahmeraum einhergehen kann.

Für alle Ausführungsformen gilt, dass der Temperierkanalstruktur eine Temperiereinrichtung zur Bereitstellung eines temperierten Temperiermediums und/oder zur Temperierung eines in dem oder den Temperierkanälen der Temperierkanalstruktur strömenden Temperiermediums zuordenbar oder zugeordnet sein kann. Eine entsprechende Temperiereinrichtung kann z. B. als Wärmetauscher ausgebildet sein oder einen solchen umfassen.

Ein zweiter Aspekt der hierin beschriebenen Erfindung betrifft eine Vorrichtung zur additiven Herstellung wenigstens eines dreidimensionalen Objekts. Die Vorrichtung zeichnet sich dadurch aus, dass sie wenigstens eine Strahllenkeinrichtung gemäß dem ersten Aspekt der Erfindung umfasst. Sämtliche Ausführungen im Zusammenhang mit der Strahllenkeinrichtung gemäß dem ersten Aspekt der Erfindung gelten analog für die Vorrichtung gemäß dem zweiten Aspekt der Erfindung.

Die Erfindung ist nachfolgend anhand der in den Fig. gezeigten Ausführungsbeispiele nochmals erläutert. Dabei zeigt:

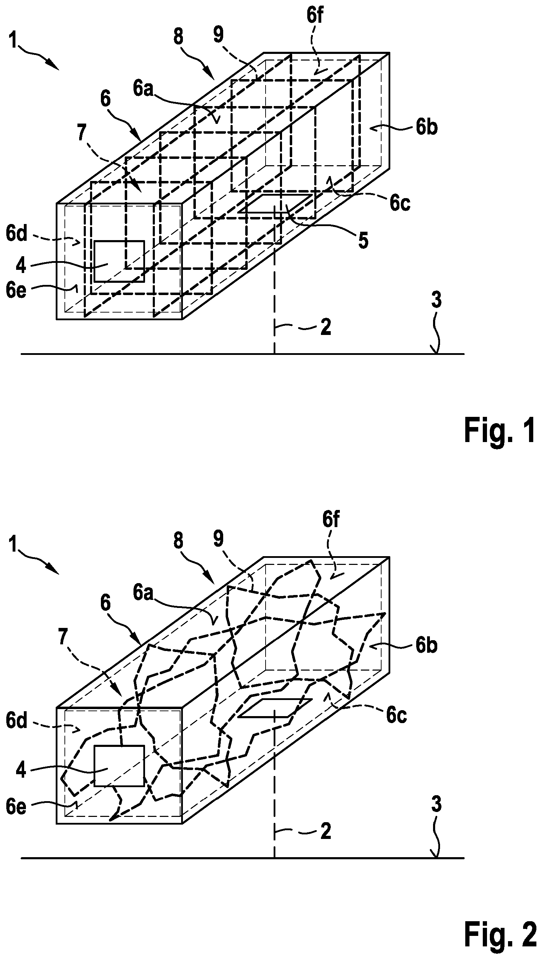

Fig. 1 - 4 jeweils eine Prinzipdarstellung einer Strahllenkeinrichtung gemäß einem Ausführungsbeispiel. Die Fig. 1-3 fallen nicht unter den Gegenstand der Ansprüche.

Fig. 1 zeigt eine Prinzipdarstellung einer auch als Scannereinrichtung zu bezeichnenden bzw. zu erachtenden Strahllenkeinrichtung 1 gemäß einem Ausführungsbeispiel, das nicht unter den Gegenstand der Ansprüche fällt, in einer perspektivischen Ansicht.

Die Strahllenkeinrichtung 1 ist zum Lenken wenigstens eines Energiestrahls 2, d. h. z. B. eines Laserstrahls, entlang einer Oberfläche 3 eingerichtet. Die Strahllenkeinrichtung 1 ist eingerichtet, einen entsprechenden Energiestrahl 2 in einer oder mehreren Ablenkrichtungen entlang einer Oberfläche 3 zu lenken.

Bei einer entsprechenden Oberfläche 3 kann es sich z. B. um die Oberfläche einer im Rahmen eines additiven Fertigungsvorgangs, wie z. B. eines selektiven Laserschmelzvorgangs, selektiv zu verfestigenden Baumaterialschicht aus einem, gegebenenfalls pulverförmigen, selektiv verfestigbaren Baumaterial, wie z. B. einem Metall, Kunststoff oder einer Keramik, handeln. Die Strahllenkeinrichtung 1 kann daher einen Bestandteil einer additiven Fertigungsvorrichtung (nicht gezeigt) bilden.

Die Strahllenkeinrichtung 1 umfasst einen optischen Eingang 4, über welchen wenigstens ein Energiestrahl 2 in die Strahllenkeinrichtung 1 eintreten kann bzw. eintritt, und einen optischen Ausgang 5, über welchen wenigstens ein vermittels der Strahllenkeinrichtung 1 auf eine jeweilige Oberfläche 3 abgelenkter Energiestrahl 2 aus der Strahllenkeinrichtung 1 austreten kann bzw. austritt. Sowohl dem Eingang 4 als auch dem Ausgang 5 der Strahllenkeinrichtung können ein oder mehrere optische Bauelemente (nicht gezeigt), wie z. B. Linsen, zuordenbar oder zugeordnet sein.

Die Strahllenkeinrichtung 1 umfasst eine Gehäusestruktur 6. Die Gehäusestruktur 6 begrenzt einen Aufnahmeraum 7 bzw. Innenraum zur Aufnahme wenigstens einer, insbesondere elektrischen und/oder elektronischen und/oder optischen, Funktionskomponente (nicht gezeigt) der Strahllenkeinrichtung 1. Die Gehäusestruktur 6 weist sonach wenigstens eine Befestigungsschnittstelle (nicht näher gezeigt) zur, gegebenenfalls lösbaren, Befestigung einer, insbesondere elektrischen und/oder elektronischen und/oder optischen, Funktionskomponente an oder in der Gehäusestruktur 6 auf. Entsprechende Befestigungsschnittstellen können z. B. eine form- und/oder kraftschlüssige Befestigung einer Funktionskomponente an oder in der Gehäusestruktur 6 ermöglichen und einstückig mit der Gehäusestruktur 6 ausgebildet sein.

Die Gehäusestruktur 6 weist zudem typischerweise wenigstens eine Befestigungsschnittstelle (nicht näher gezeigt) zur, gegebenenfalls lösbaren, Befestigung der Gehäusestruktur 6 an einem Drittgegenstand (nicht näher gezeigt), wie z. B. einer die Strahllenkeinrichtung 1 einsetzenden Vorrichtung, wie z. B. einer additiven Fertigungsvorrichtung, auf. Entsprechende Befestigungsschnittstellen können z. B. eine form- und/oder kraftschlüssige Befestigung der Gehäusestruktur 6 an einem Drittgegenstand ermöglichen und einstückig mit der Gehäusestruktur 6 ausgebildet sein.

Der Aufnahmeraum 7 der in den Fig. rein beispielhaft quaderartig bzw. -förmig ausgeführten Gehäusestruktur 6 ist durch Wandungen 6a - 6f bzw. entsprechende Wandungsabschnitte der Gehäusestruktur 6 begrenzt. Der Aufnahmeraum 7 ist sonach in funktioneller bzw. konstruktiver Hinsicht zur Aufnahme wenigstens einer Funktionskomponente der Strahllenkeinrichtung 1 eingerichtet. Mithin ist in dem Aufnahmeraum 7 wenigstens eine Funktionskomponente der Strahllenkeinrichtung 1 angeordnet oder ausgebildet. Sofern die Gehäusestruktur 1 mehrere Aufnahmeräume 7 begrenzt, kann in jedem Aufnahmeraum 7 wenigstens eine Funktionskomponente der Strahllenkeinrichtung 1 angeordnet oder ausgebildet sein.

Bei einer entsprechenden elektrischen bzw. elektronischen Funktionskomponente der Strahllenkeinrichtung 1 kann es sich z. B. um eine hardware- softwaremäßig implementierte Einrichtung der Strahllenkeinrichtung 1, wie z. B. um eine Steuer- bzw. Regeleinrichtung, oder um eine Antriebseinrichtung für ein optisches Bauelement, handeln. Bei einer entsprechenden optischen Funktionskomponente der Strahllenkeinrichtung 1 kann es sich z. B. um ein optisches Bauelement der Strahllenkeinrichtung 1, wie z. B. um einen Umlenkspiegel, handeln. Die innerhalb des Aufnahmeraums 7 aufgenommenen Funktionskomponenten können im Betrieb der Strahllenkeinrichtung 1 zusammenwirken; die Strahllenkeinrichtung 1 kann daher insgesamt als elektro-optische Einrichtung bezeichnet bzw. erachtet werden.

Die Gehäusestruktur 6 weist eine Temperierkanalstruktur 8 auf, welche wenigstens einen von einem Temperiermedium - hierbei kann es sich grundsätzlich um ein, gegebenenfalls aktiv temperiertes, Gas und/oder um eine, gegebenenfalls aktiv temperierte, Flüssigkeit handeln - durchströmbaren bzw. durchströmten Temperierkanal 9 umfasst. Die Temperierkanalstruktur 8 ist in die Gehäusestruktur 6 integriert. Die Integration der Temperierkanalstruktur 8 in die Gehäusestruktur 6 ist dadurch realisiert, dass entsprechende Temperierkanäle in die den Aufnahmeraum 7 begrenzenden Wandungen 6a - f der Gehäusestruktur integriert sind.

Anhand der Fig. ist ersichtlich, dass sich jeweilige Temperierkanäle 9 der Temperierkanalstruktur 8 in wenigstens einer Raumrichtung und/oder -ausrichtung durch die Gehäusestruktur 6 erstreckend angeordnet oder ausgebildet sind.

Je nach räumlicher Anordnung und/oder Ausrichtung der Temperierkanäle 9 kann sonach eine lokale oder globale Temperierung der Gehäusestruktur 6 realisiert werden. Die Temperierkanalstruktur 8 kann sich dabei in regelmäßiger und/oder unregelmäßiger Anordnung netzwerkartig bzw. -förmig durch die Gehäusestruktur 6 erstreckend ausgebildet sein. Konkret kann eine Temperierkanalstruktur 8, wie rein beispielhaft in Fig.1 gezeigt, sonach als sich ein- oder mehrdimensional, z. B. gitterartig bzw. -förmig, durch die Gehäusestruktur 6 erstreckende Netzwerkstruktur ausgebildet sein.

Durch die Temperierkanalstruktur 8 ist eine Möglichkeit einer zumindest abschnittsweisen, gegebenenfalls vollständigen, Temperierung der Gehäusestruktur 6 gegeben, als durch das durch den oder die jeweiligen Temperierkanäle 9 der Temperierkanalstruktur 8 strömende Temperiermedium zum Zwecke der Kühlung gezielt thermische Energie aufgenommen und somit aus der Gehäusestruktur 6 abgeführt und/oder zum Zwecke der Beheizung gezielt thermische Energie abgegeben und somit in die Gehäusestruktur 6 zugeführt werden kann.

Die Temperierkanalstruktur 8 kann sonach so konzipiert sein, dass sie in allen Bereich der Gehäusestruktur 6 die gleiche Wärmeaustauschkapazität aufweist. Entsprechendes ist in dem Ausführungsbeispiel gemäß Fig. 1 angedeutet.

Es ist jedoch auch denkbar, die Temperierkanalstruktur 8 so zu konzipieren, dass diese in bestimmten Bereichen der Gehäusestruktur 6 eine erste Wärmeaustauschkapazität, d. h. z. B. eine besonders hohe Wärmeaustauschkapazität, und in zweiten Bereichen der Gehäusestruktur 6 eine von der ersten Wärmeaustauschkapazität verschiedene zweite Wärmeaustauschkapazität aufweist. Entsprechendes ist in dem Ausführungsbeispiel Fig. 2, das nicht unter den Gegenstand der Ansprüche fällt, angedeutet. Dies kann z. B. durch eine besonderes dichte Anordnung von Temperierkanälen 9 pro Fläche bzw. Volumen und/oder eine bestimmte Querschnittsgeometrien der Temperierkanäle 9 realisiert werden; mithin können in einem ersten Bereich der Gehäusestruktur 6 eine erste Anzahl von Temperierkanälen 9 pro Fläche bzw. Volumen und/oder Temperierkanäle 9 einer ersten Querschnittsgeometrie und in einem von dem ersten Bereich verschiedenen zweiten Bereich der Gehäusestruktur 6 eine von der ersten Anzahl verschiedene zweite Anzahl an Temperierkanälen 9 pro Fläche bzw. Volumen und/oder Temperierkanäle 9 einer von der ersten Querschnittsgeometrie verschiedenen zweiten Querschnittsgeometrie angeordnet oder ausgebildet sein. Derart können sonach unterschiedlich temperierbare bzw. temperierte Bereiche der Gehäusestruktur 6 geschaffen werden.

Die Temperierkanalstruktur 8 kann mehrere miteinander kommunizierende Temperierkanäle 9 und/oder mehrere nicht miteinander kommunizierende Temperierkanäle 9 aufweisen. Mehrere Temperierkanäle 9 der Temperierkanalstruktur 8 können sonach strömungstechnisch miteinander verbunden sein oder nicht miteinander verbunden sein.

Durch die Temperierkanalstruktur 8 können ein oder mehrere offene oder geschlossene Temperierkreisläufe in die Gehäusestruktur 6 integriert werden. Beispielsweise kann ein durch wenigstens einen ersten Temperierkanal 9 gebildeter und sich zumindest abschnittsweise durch die Gehäusestruktur 6 erstreckender erster Temperierkreislauf ein Heizkrauslauf zur Beheizung der Gehäusestruktur 6 und ein durch wenigstens einen zweiten Temperierkanal 9 gebildeter und sich zumindest abschnittsweise durch die Gehäusestruktur 6 erstreckender zweiter Temperierkreislauf ein Kühlkreislauf zur Kühlung der Gehäusestruktur 6 sein. Denkbar ist es gleichermaßen, dass ein entsprechender erster Temperierkreislauf ein erster Heizkreislauf und ein entsprechender zweiter Temperierkreislauf ein zweiter Heizkreislauf oder ein entsprechender erster Temperierkreislauf ein erster Kühlkreislauf und ein entsprechender zweiter Temperierkreislauf ein zweiter Kühlkreislauf ist.

Durch die Integration der Temperierkanalstruktur 8 in die Gehäusestruktur 6 ist eine Kompensationsmöglichkeit von thermisch induzierten Änderungen der Ausrichtung und/oder Positionierung der dem Aufnahmeraum 7 aufgenommenen Funktionskomponenten der Strahllenkeinrichtung 1 geschaffen.

Die Gehäusestruktur 6 ist typischerweise additiv gefertigt; die Gehäusestruktur 6 ist sonach typischerweise in einem additiven Fertigungsverfahren, wie z. B. in einem selektiven Laserschmelzverfahren, einem Binder-Jetting-Verfahren, etc., hergestellt. Derart lässt sich die Temperierkanalstruktur 8, gleich wie komplex diese gestaltet ist, auf einfache Weise in die Gehäusestruktur 6 integrieren.

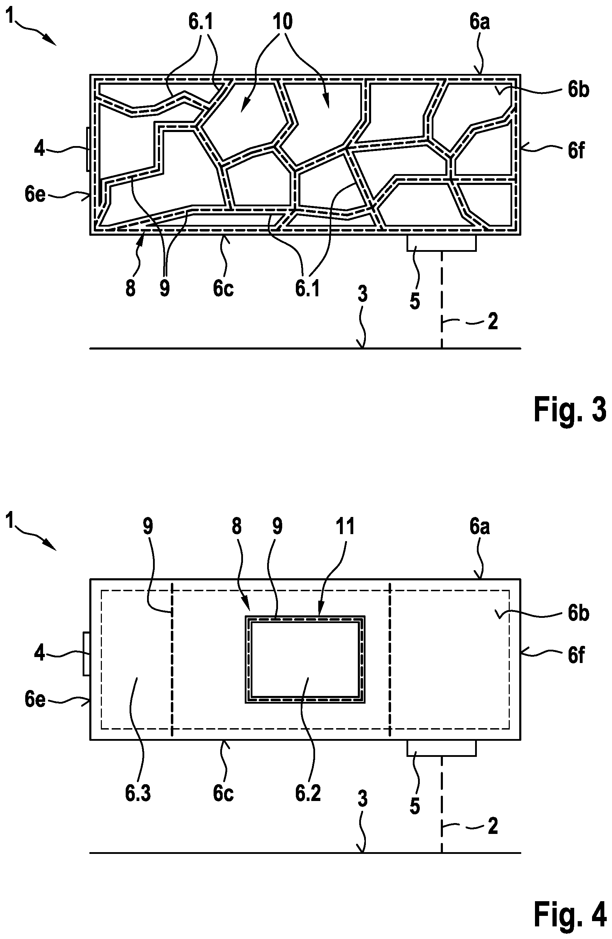

Anhand des in den Fig. 3 in einer Seitenansicht gezeigten Ausführungsbeispiels, das nicht unter den Gegenstand der Ansprüche fällt, ist ersichtlich, dass wenigstens eine den Aufnahmeraum 7 der Gehäusestruktur 6 begrenzende Wandung 6a - 6f - hier beispielhaft die Wandung 6b - mit wenigstens einer Durchbrechung 10, Öffnung oder dergleichen ausgebildet sein oder eine solche aufweisen kann. Die entsprechende Wandung 6b der Gehäusestruktur 6 weist sonach eine durch jeweilige Durchbrechungen 10, Öffnungen oder dergleichen und diese begrenzende, z. B. stegartige bzw. -förmige, Wandungsabschnitte 6.1 definierte offene Struktur auf. Entsprechendes kann selbstverständlich für alle Wandungen der Gehäusestruktur 6 gelten. Die Gehäusestruktur 6 kann sonach, insbesondere im Vergleich zu einer Gehäusestruktur 6 mit massiv ausgeführten Wandungen, im Hinblick auf Aspekte, wie Gewicht, mechanische Eigenschaften, thermische Eigenschaften, etc., optimiert ausgeführt sein. Die Ausbildung der Wandung 6b mit entsprechenden Durchbrechungen 10, Öffnung oder dergleichen kann aus der additiven Fertigung der Gehäusestruktur 6 resultieren.

Die die Temperierkanalstruktur 8 bildenden Temperierkanäle 9 können in dem Ausführungsbeispiel gemäß Fig. 3 in den Wandungsabschnitten 6.1 angeordnet oder ausgebildet sein.

Anhand des in Fig. 3 gezeigten Ausführungsbeispiels lässt sich sonach veranschaulichen, dass wenigstens eine der den Aufnahmeraum 7 begrenzenden Wandungen 6a - f zumindest abschnittsweise mit einer, insbesondere im Hinblick auf auf diese im Betrieb der Strahllenkeinrichtung 1 wirkenden mechanischen und/oder thermischen Belastungen optimierten, bionischen Struktur ausgebildet sein oder eine solche aufweisen kann. Die Ausbildung einer entsprechenden Wandungen 6a - f mit einer bionischen Struktur kann aus der additiven Fertigung der Gehäusestruktur 6 resultieren.

Anhand des in den Fig. 4 in einer Seitenansicht gezeigten Ausführungsbeispiels ist ersichtlich, dass wenigstens eine den Aufnahmeraum 7 der Gehäusestruktur 6 begrenzende Wandung 6a - f - hier beispielhaft die Wandung 6b - mit einem einen eine Zugangsmöglichkeit in den Aufnahmeraum 7 schaffenden Wandungsabschnitt 6.2 begrenzenden Sollbruchbereich 11 ausgebildet ist. Die Wandung 6b ist sonach mit einem Sollbruchbereich 11 ausgebildet, welcher einen eine Zugangsmöglichkeit in den Aufnahmeraum 7 schaffenden Wandungsabschnitt 6.2 begrenzt. Die Wandung 6b der Gehäusestruktur 6 weist sonach einen durch einen Sollbruchbereich 11 begrenzten und somit von übrigen Wandungsabschnitten 6.3 der Wandung 6b abgrenzbaren Wandungsabschnitt 6.2 auf, welcher in einem in Fig. 4 gezeigten ersten Zustand mit den übrigen Wandungsabschnitten 6.3 der Wandung 6b verbunden ist, sodass keine Zugangsmöglichkeit in den Aufnahmeraum 7 geschaffen ist, und in einem zweiten Zustand nicht mit den übrigen Wandungsabschnitten 6.3 der Wandung 6b verbunden ist, sodass eine Zugangsmöglichkeit in den Aufnahmeraum 7 geschaffen ist. Der Wandungsabschnitt 6.2 ist in dem ersten Zustand sonach über einen punkt- oder linienförmigen Verbindungsbereich mit den übrigen Wandungsabschnitten 6.3 der Wandung 6b verbunden und in dem zweiten Zustand nicht über den Verbindungsbereich mit den übrigen Wandungsabschnitten 6.3 der Wandung 6b verbunden.

Der zweite Zustand kann auch dadurch realisiert sein, dass ein entsprechender Wandungsabschnitt 6.2 in dem zweiten Zustand abschnittsweise weiterhin an den übrigen Wandungsabschnitten 6.3 verbunden ist, nunmehr allerdings z. B. deckel- oder klappenartig, an den übrigen Wandungsabschnitten 6.3 angebunden ist, wodurch in dem zweiten Zustand ebenso eine Zugangsmöglichkeit in den Aufnahmeraum 7 geschaffen werden kann.

Die Überführung des Wandungsabschnitts 6.2 von dem ersten Zustand in den zweiten Zustand erfolgt durch Aktivieren des Sollbruchbereichs 11, d. h. insbesondere durch Brechen des Sollbruchbereichs 11. Das Aktivieren bzw. Brechen des Sollbruchbereichs 11 kann z. B. mechanisch, d. h. durch Einbringen mechanischer Energie, und/oder thermisch, d. h. durch Ab- und/oder Zuführen thermischer Energie, realisiert werden.

In dem in Fig. 4 gezeigten Ausführungsbeispiel ist ein Temperierkanal 9 sich entlang des Sollbruchbereichs 11 bzw. innerhalb des Sollbruchbereichs 11 erstreckend ausgebildet. Der Temperierkanal 9 ist eingerichtet, durch gezieltes Temperieren ein Aktivieren bzw. Brechen des Sollbruchbereichs 11 herbeizuführen. Der Sollbruchbereich 11 kann hierfür über ein in dem Temperierkanal 9 strömendes Temperiermedium auf eine bestimmte Temperatur erhitzt werden, was z. B. zu einem Brechen oder Schmelzen des Sollbruchbereichs 11 führen kann, oder auf eine bestimmte Temperatur gekühlt werden, was z. B. zu einem Brechen (Sprödbrechen) des Sollbruchbereichs 11 führen kann. Selbstverständlich sind über den Temperierkanal 9 auch dynamische Temperierungen, d. h. insbesondere wechselnde Aufheizungen und Abkühlungen, des Sollbruchbereichs 11 denkbar, als diese ebenso zu einem gewünschten strukturellen Versagen des Sollbruchbereichs 11 führen können. Analoges gilt für eine ebenso denkbare Variante mit mehreren sich entlang bzw. innerhalb des Sollbruchbereichs 11 erstreckend ausgebildeten Temperierkanälen 9.

Der Sollbruchbereich 11 ist sonach, insbesondere strukturell, derart beschaffen, dass er bei Durchströmen des Temperierkanals 9 mit einem eine, gegebenenfalls materialspezifische, Grenztemperatur aufweisenden Temperiermedium bricht. Diese Beschaffenheit des Sollbruchbereichs 11 kann aus der additiven Fertigung der Gehäusestruktur 6 resultieren.

Im Zusammenhang mit dem in Fig. 4 gezeigten Ausführungsbeispiel ist denkbar, dass ein eine nach Entfernen des Wandungsabschnitts 6.2 entstandene Zugangsöffnung in den Aufnahmeraum 7 begrenzender Wandungsabschnitt 6.3 der Wandung 6b mit einer, insbesondere durch eine Mikrostrukturierung gebildeten, Befestigungsstruktur (nicht bezeichnet) ausgebildet ist, welche eine erneute Befestigung des Wandungsabschnitts 6.2 an den die Zugangsöffnung begrenzenden Wandungsabschnitt 6.3 ermöglicht. Mithin kann ein nach Entfernen des Wandungsabschnitts 6.2 verbliebener und die nunmehr durch Entfernen des Wandungsabschnitts 6.2 entstandene Zugangsöffnung in den Aufnahmeraum 7 begrenzender Wandungsabschnitt 6.3 eine Befestigungsstruktur aufweisen, welche ein erneutes Befestigen eines entsprechenden Wandungsabschnitts 6.2, d. h. insbesondere des zuvor entfernten ersten Wandungsabschnitts 6.2, an dem die Zugangsöffnung in den Aufnahmeraum 7 begrenzenden Wandungsabschnitt 6.3 und damit einhergehend ein Verschließen der zuvor geschaffenen Zugangsöffnung in den Aufnahmeraum 7 ermöglicht. Der mit dem die Zugangsöffnung begrenzenden Wandungsabschnitt 6.3 verbindbare oder verbundene Wandungsabschnitt 6.2 kann mit einer zu der Befestigungsstruktur des Wandungsabschnitts 6.3 korrespondieren Befestigungsstruktur ausgebildet sein. Die beiden Befestigungsstrukturen können z. B. kraft- und/oder formschlüssig zusammenwirken, um eine erneute Befestigung des Wandungsabschnitts 6.2 an dem Wandungsabschnitt 6.3 herbeizuführen. Jeweilige Befestigungsstrukturen können additiv gefertigte Strukturen sein und sonach aus der additiven Fertigung der Gehäusestruktur 6 resultieren.

Eine entsprechende Befestigungsstruktur kann z. B. durch eine Mikrostrukturierung, wie z. B. durch eine besondere Rauigkeit, insbesondere Mikroraugkeit, der jeweiligen Wandungsabschnitte 6.2, 6.3 ausgebildet sein. Entsprechend kann an dem Wandungsabschnitt 6.2 ein zu der Mikrostrukturierung des die Zugangsöffnung begrenzenden Wandungsabschnitts 6.3 korrespondierende Mikrostrukturierung ausgebildet sein. Jeweilige Mikrostrukturierungen können additiv gefertigte Strukturierungen sein und sonach aus der additiven Fertigung der Gehäusestruktur 6 resultieren.

Eine entsprechende Befestigungsstruktur kann dichtende Eigenschaften aufweisen, sodass ein erneutes Befestigen eines zuvor entfernten Wandungsabschnitts 6.2 an einem die Zugangsöffnung begrenzenden Wandungsabschnitt 6.3 mit einer Abdichtung der zuvor geschaffenen Zugangsöffnung in den Aufnahmeraum 7 einhergehen kann.

Für alle Ausführungsbeispiele gilt, dass der Temperierkanalstruktur 8 eine Temperiereinrichtung (nicht gezeigt) zur Bereitstellung eines temperierten Temperiermediums und/oder zur Temperierung eines in dem oder den Temperierkanälen 9 der Temperierkanalstruktur 8 strömenden Temperiermediums zuordenbar oder zugeordnet sein kann. Eine entsprechende Temperiereinrichtung kann z. B. als Wärmetauscher ausgebildet sein oder einen solchen umfassen.

## Patentansprüche

1. Strahllenkeinrichtung (1) zum Lenken wenigstens eines Energiestrahls (2) entlang einer Oberfläche (3), insbesondere entlang einer im Rahmen eines additiven Fertigungsvorgangs selektiv zu verfestigenden Oberfläche (3) einer selektiv verfestigbaren Baumaterialschicht, umfassend eine einen Aufnahmeraum (7) zur Aufnahme wenigstens einer Funktionskomponente der Strahllenkeinrichtung (1) begrenzenden Gehäusestruktur (6), wobei die Gehäusestruktur (6) eine wenigstens einen von einem Temperiermedium durchströmbaren Temperierkanal (9) umfassende Temperierkanalstruktur (8) aufweist, **dadurch gekennzeichnet, dass**
in wenigstens einer den Aufnahmeraum (7) der Gehäusestruktur (6) begrenzenden Wandung (6a - f) der Gehäusestruktur (6) wenigstens ein einen eine Zugangsmöglichkeit in den Aufnahmeraum (7) schaffenden Wandungsabschnitt (6.2) zumindest abschnittsweise, gegebenenfalls vollständig, begrenzenden Sollbruchbereich (11) ausgebildet ist, wobei
der wenigstens eine Temperierkanal (9) sich zumindest abschnittsweise entlang des wenigstens einen Sollbruchbereichs (11) und/oder innerhalb des wenigstens einen Sollbruchbereichs (11) erstreckend ausgebildet ist.

2. Strahllenkeinrichtung nach Anspruch 1, wobei der wenigstens eine Temperierkanal (9) sich zumindest abschnittsweise innerhalb mehrerer den Aufnahmeraum (7) der Gehäusestruktur (6) begrenzenden Wandungen (6a - f) der Gehäusestruktur (6) erstreckend ausgebildet ist.

3. Strahllenkeinrichtung nach einem der vorhergehenden Ansprüche, wobei die Temperierkanalstruktur (9) mehrere miteinander kommunizierende Temperierkanäle (9) und/oder mehrere nicht miteinander kommunizierende Temperierkanäle (9) aufweist.

4. Strahllenkeinrichtung nach einem der vorhergehenden Ansprüche, wobei wenigstens eine den Aufnahmeraum (7) der Gehäusestruktur (6) begrenzende Wandung (6a - f) der Gehäusestruktur (6) mit wenigstens einer Durchbrechung (10) ausgebildet ist.

5. Strahllenkeinrichtung nach einem der vorhergehenden Ansprüche, wobei wenigstens eine den Aufnahmeraum (7) der Gehäusestruktur (6) begrenzende Wandung (6a - f) der Gehäusestruktur (6) zumindest abschnittsweise mit einer, insbesondere im Hinblick auf auf diese im Betrieb der Strahllenkeinrichtung (1) wirkenden, insbesondere mechanischen und/oder thermischen, Belastungen optimierten, bionischen Struktur ausgebildet ist.

6. Strahllenkeinrichtung nach einem der vorhergehenden Ansprüche, wobei der wenigstens eine Sollbruchbereich (11) derart beschaffen ist, dass er bei Durchströmen des wenigstens einen Temperierkanals (9) mit einem eine, gegebenenfalls materialspezifische, Grenztemperatur aufweisenden Temperiermedium bricht.

7. Strahllenkeinrichtung nach einem der vorherigen Ansprüche, wobei ein zweiter Wandungsabschnitt (6.3) der Gehäusestruktur (6) den Wandungsabschnitt (6.2) begrenzt und zumindest abschnittsweise, gegebenenfalls vollständig, mit einer durch eine Mikrostrukturierung gebildeten Befestigungsstruktur ausgebildet ist, welche eingerichtet ist, nach Entfernen des Wandungsabschnitts (6.2) eine erneute Befestigung des Wandungsabschnitts (6.2) an den zweiten Wandungsabschnitt (6.3) zu ermöglichen.

8. Strahllenkeinrichtung nach einem der vorhergehenden Ansprüche, wobei die Gehäusestruktur (6) wenigstens eine Befestigungsschnittstelle zur, gegebenenfalls lösbaren, Befestigung einer, insbesondere elektrischen und/oder elektronischen und/oder optischen, Funktionskomponente an oder in der Gehäusestruktur (6) aufweist.

9. Strahllenkeinrichtung nach einem der vorhergehenden Ansprüche, wobei die Gehäusestruktur (6) zumindest abschnittsweise, gegebenenfalls vollständig, additiv gefertigt ist.

10. Vorrichtung zur additiven Herstellung wenigstens eines dreidimensionalen Objekts, umfassend wenigstens eine Strahllenkeinrichtung (1) nach einem der vorhergehenden Ansprüche.

## Claims

1. Beam steering device (1) for steering at least one energy beam (2) along a surface (3), in particular along a selectively solidifiable surface (3) of a selectively solidifiable building material layer in the context of an additive manufacturing process, comprising a receiving space (7) for receiving at least one functional component of the beam steering device (1) limiting housing structure (6), wherein the housing structure (6) has at least one temperature control channel (9) comprising a temperature control channel structure (8) which can be flowed through by a temperature control medium, **characterized in that**
in at least one of the receiving space (7) of the housing structure (6) limiting wall (6a - f) of the housing structure (6) at least one of an access possibility in the receiving space (7) creating wall portion (6.2) is formed at least partially, if necessary completely, limiting predetermined breaking range (11), wherein
The at least one temperature control channel (9) is formed extending at least in sections along the at least one predetermined breaking region (11) and / or within the at least one predetermined breaking region (11).

2. Beam steering device according to claim 1, wherein the at least one temperature control channel (9) is formed extending at least in sections within several of the receiving space (7) of the housing structure (6) limiting walls (6a - f) of the housing structure (6).

3. Beam steering device according to any one of the preceding claims, wherein the temperature control channel structure (9) comprises a plurality of communicating temperature control channels (9) and/or a plurality of non-communicating temperature control channels (9).

4. Beam steering device according to any one of the preceding claims, wherein at least one of the receiving space (7) of the housing structure (6) limiting wall (6a - f) of the housing structure (6) with at least one break (10) is formed.

5. Beam steering device according to any one of the preceding claims, wherein at least one of the receiving space (7) of the housing structure (6) limiting wall (6a - f) of the housing structure (6) is formed at least in part with a bionic structure optimized in particular with regard to this acting in operation of the beam steering device (1), in particular mechanical and / or thermal loads.

6. Beam steering device according to any one of the preceding claims, wherein the at least one predetermined breaking range (11) is such that it breaks when flowing through the at least one tempering channel (9) with a, optionally material-specific, limiting temperature having tempering medium.

7. Beam steering device according to any one of the preceding claims, wherein a second wall portion (6.3) of the housing structure (6) limits the wall portion (6.2) and is formed at least in part, if necessary completely, with a fastening structure formed by a microstructuring, which is set up to allow a renewed fastening of the wall portion (6.2) to the second wall portion (6.3) after removal of the wall portion (6.2).

8. Beam steering device according to any one of the preceding claims, wherein the housing structure (6) has at least one fastening interface for, optionally detachable, fastening a, in particular electrical and / or electronic and / or optical, functional component to or in the housing structure (6).

9. Beam steering device according to any one of the preceding claims, wherein the housing structure (6) is at least partially, optionally completely, additively manufactured.

10. Device for additive manufacturing of at least one three-dimensional object, comprising at least one beam steering device (1) according to one of the preceding claims.

## Revendications

1. Dispositif de direction du faisceau (1) destiné à diriger au moins un faisceau d'énergie (2) le long d'une surface (3), en particulier le long d'une surface (3) à solidifier sélectivement dans le cadre d'une opération de fabrication additive, d'une couche de matériau de construction à solidifier sélectivement, comprenant une structure de boîtier (6) délimitant un espace de réception (7) pour accueillir au moins un composant fonctionnel du dispositif de direction du faisceau (1), la structure du boîtier (6) comportant au moins un canal de régulation de la température (9) traversant un fluide de régulation de la température (8) **caractérisé en ce que:**
dans au moins une paroi (6a - f) de la structure (6) délimitant l'espace de réception (7) de la structure du boîtier (6), au moins une section (6.2) délimitant l'accès à l'espace de réception (7), au moins une section (11) délimitant l'espace de rupture cible, le cas échéant entièrement, étant entendu que:
dont au moins un canal de thermorégulation (9) s'étend au moins par sections le long d'au moins une zone de rupture prévue (11) et/ou à l'intérieur d'au moins une zone de rupture prévue (11).

2. Dispositif de direction de faisceau selon la revendication 1, dans lequel au moins un canal de thermorégulation (9) est formé au moins par sections à l'intérieur de plusieurs parois (6a - f) de la structure du boîtier (6) délimitant l'espace de réception (7) de la structure du boîtier (6).

3. Dispositif de direction de faisceau selon l'une quelconque des revendications précédentes, dans lequel la structure du canal de thermorégulation (9) comporte plusieurs canaux de thermorégulation communicants (9) et/ou plusieurs canaux de thermorégulation non communicants (9)

4. Dispositif de direction du faisceau selon l'une quelconque des revendications précédentes, dans lequel au moins une paroi (6a - f) de la structure du boîtier (6) délimitant l'espace de réception (7) de la structure du boîtier (6) est formée avec au moins une perforation (10).

5. Dispositif de direction du faisceau selon l'une quelconque des revendications précédentes, dans lequel au moins une paroi (6a - f) de la structure du boîtier (6) délimitant l'espace de réception (7) de la structure du boîtier (6) est formée, au moins par sections, avec une structure bionique optimisée, en particulier en ce qui concerne cette structure agissant dans le fonctionnement du dispositif de direction du faisceau (1), en particulier en ce qui concerne les charges mécaniques et/ou thermiques.

6. Dispositif de direction du faisceau selon l'une quelconque des revendications précédentes, dans lequel au moins une zone de rupture visée (11) est conçue de manière à briser, en cas de passage d'au moins un canal de thermorégulation (9), un milieu de thermorégulation présentant, le cas échéant, une température limite spécifique au matériau.

7. Dispositif de direction de faisceau selon l'une quelconque des revendications précédentes, dans lequel une deuxième section de paroi (6.3) de la structure du boîtier (6) délimite la section de paroi (6.2) et est formée au moins par section, le cas échéant complètement, avec une structure de fixation formée par une microstructuration, qui est équipée pour permettre, après enlèvement de la section de paroi (6.2), une nouvelle fixation de la section de paroi (6.2) à la deuxième section de paroi (6.3).

8. Dispositif de direction de faisceau selon l'une quelconque des revendications précédentes, dans lequel la structure du boîtier (6) comporte au moins une interface de fixation pour la fixation, éventuellement amovible, d'un composant fonctionnel, notamment électrique et/ou électronique et/ou optique, sur ou dans la structure du boîtier (6).

9. Dispositif de direction du faisceau selon l'une quelconque des revendications précédentes, dans lequel la structure du boîtier (6) est fabriquée de manière additive au moins par sections, le cas échéant en totalité.

10. Dispositif pour la fabrication additive d'au moins un objet tridimensionnel comprenant au moins un dispositif de direction de faisceau (1) selon l'une quelconque des revendications précédentes.
